# EUROPEAN PATENT APPLICATION

(11) **EP 4 760 128 A1**
(43) Date of publication of application: **17.06.2026**
(21) Application number: 25222150.2
(22) Date of filing: 10.12.2025
(51) Int. Cl.: F16H 59/02, F16H 59/04, F16H 59/10

(54) **CONTROL TOWER OF A GEARBOX FOR ROAD VEHICLES**

(30) Priority: 10.12.2024 IT 202400028017
(71) Applicant: FERRARI S.p.A., 41100 Modena (IT)
(72) Inventor: SEGALINI, Alessandro, 41100 MODENA (IT); BARALDINI, Marco, 41100 MODENA (IT); SPLENDI, Luca, 41100 MODENA (IT)
(74) Representative: Studio Torta S.p.A.

(57) **Abstract**

A control tower of a gearbox for road vehicles has an operating lever (21) mounted so as to rotate around two rotation axes (6, 12), which are transversal to one another and move between at least two pairs of gears and between the gears of each pair of gears; and a detection device (9, 15) to detect the angular position of the operating lever (21) around the two rotation axes (6, 12) and to supply at least one electrical signal to an electronic control unit (10) configured to detect the gear engaged by the operating lever (21) and control the operation of the gearbox.

## Description

### CROSS-REFERENCE TO RELATED APPLICATIONS

This patent application claims priority from Italian patent application no. 102024000028017 filed on December 10, 2024, the entire disclosure of which is incorporated herein by reference.

### TECHNICAL FIELD

This invention relates to a control tower of a gearbox for road vehicles.

### BACKGROUND

To operate manual gearboxes, control towers comprising an operating lever mounted to rotate about two mutually orthogonal rotation axes and allow the driver to engage multiple gears either sequentially or non-sequentially, and a transmission device to connect the operating lever and at least one selector fork configured to engage the selected gear via the operating lever are known.

Since the transmission device normally comprises a plurality of connecting rods and/or cables, known control towers of the type described above are relatively complex and expensive.

To control the operation of automatic gearboxes, control towers comprising an operating lever mounted to rotate around a single rotation axis, and a detection device, in particular an angular position sensor, to detect the angular position of the operating lever around the aforementioned rotation axis, are also known.

The detection device is configured to supply an electrical signal to an electronic control unit configured, in turn, to control the gear selected via the operating lever and control the operation of the gearbox.

Known control towers of the type described above have certain drawbacks mainly stemming from the fact that the driver can only select gears sequentially, each time engaging only one gear immediately above or below the gear currently in use.

### SUMMARY

The object of the present invention is to provide a control tower of an automatic gearbox for road vehicles that overcomes the drawbacks described above and that is simple and inexpensive to produce.

According to this invention, a control tower of a gearbox for road vehicles is provided as claimed in the appended claims.

### BRIEF DESCRIPTION OF THE DRAWINGS

This invention will now be described with reference to the accompanying drawings, which show a non-limiting embodiment thereof, wherein:
Figure 1 is a schematic perspective view, with parts removed for clarity, of a preferred embodiment of the control tower of this invention;
Figure 2 is a schematic perspective view, with parts removed for clarity, of a first detail of the control tower in Figure 1;
Figure 3 is a schematic front view, with parts removed for clarity, of the detail in Figure 2;
Figure 4 is a schematic side view, with parts removed for clarity, of a detail in Figures 2 and 3 shown in two different operating positions;
Figures 5 and 6 are two schematic perspective views, with parts removed for clarity, of a second detail of the control tower in Figure 1;
Figure 7 is a schematic side view, with parts removed for clarity, of the detail in Figures 5 and 6 shown in two different operating positions; and
Figure 8 is a cross-section view of the control tower in Figure 1.

### DESCRIPTION OF EMBODIMENTS

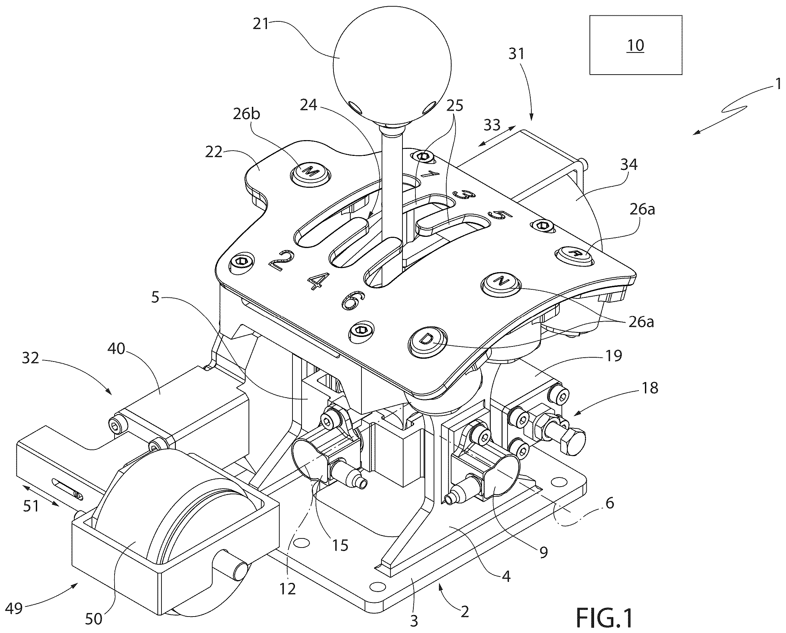

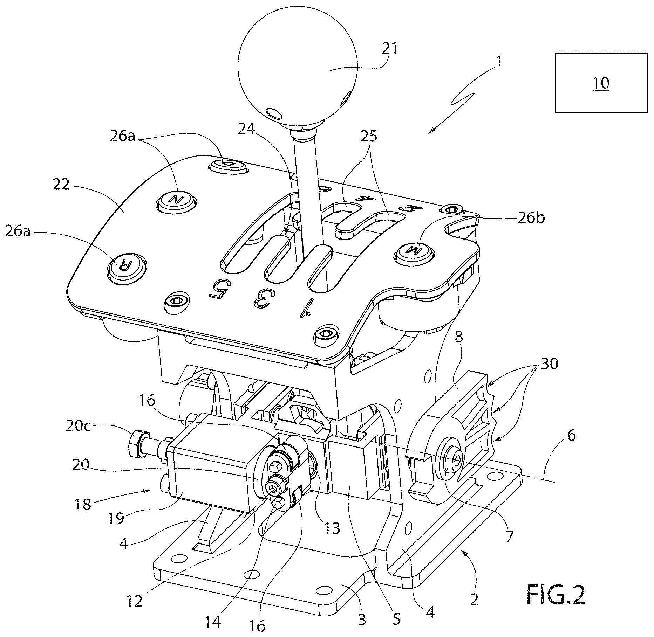

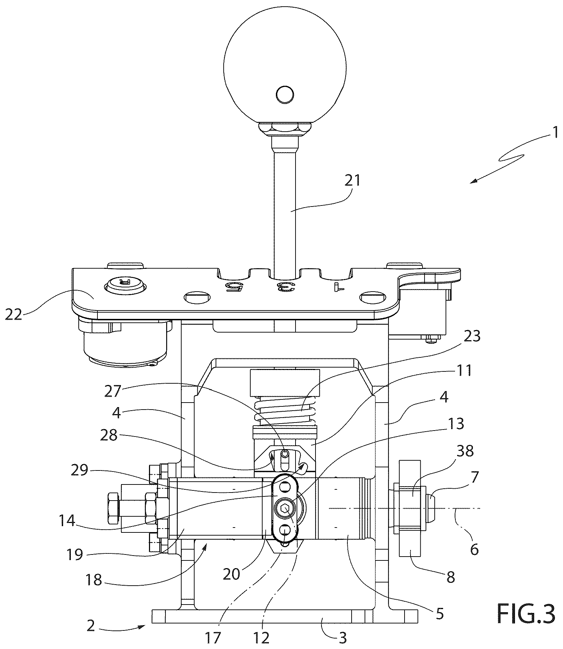

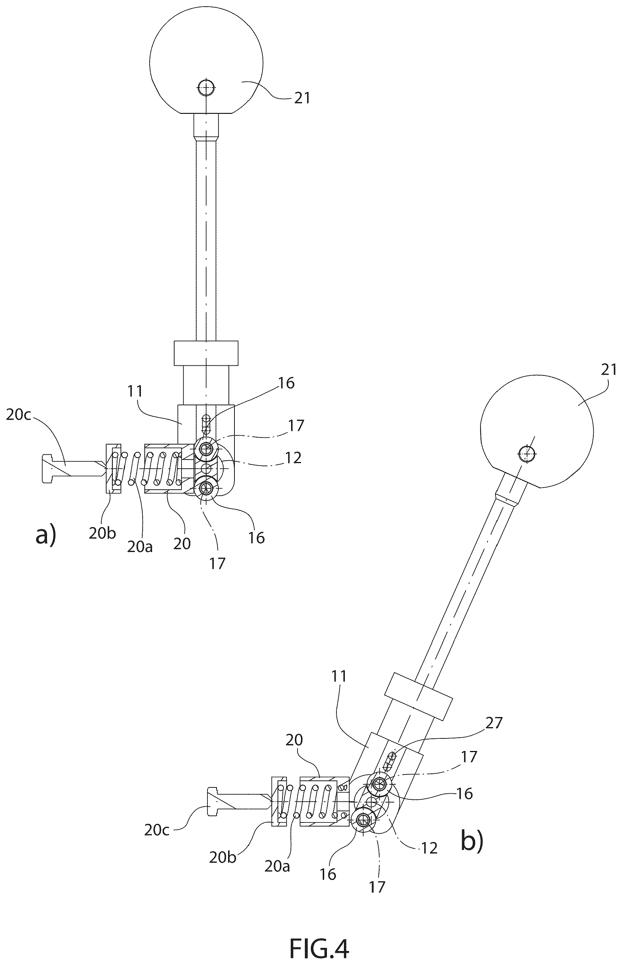

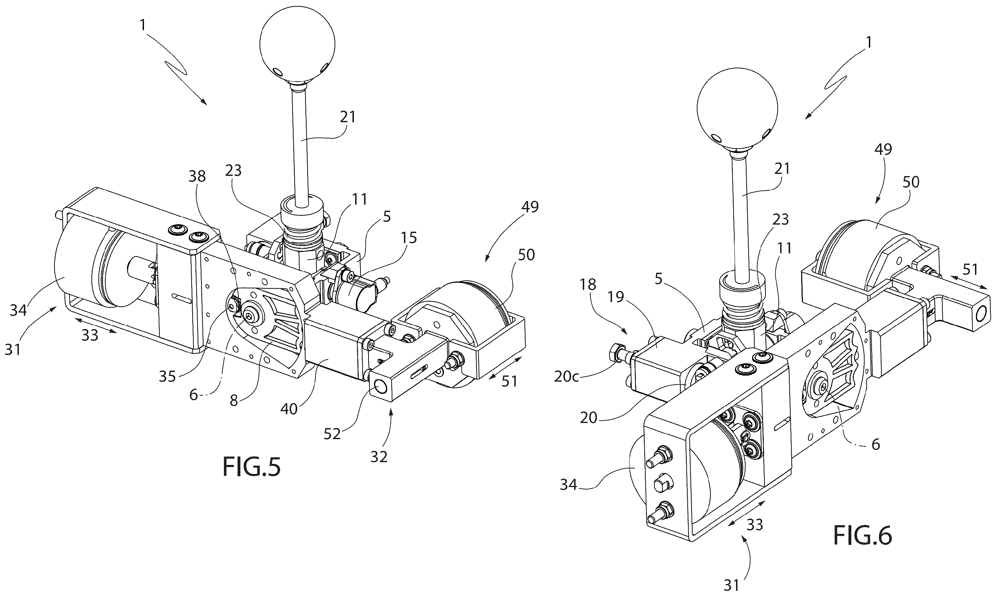

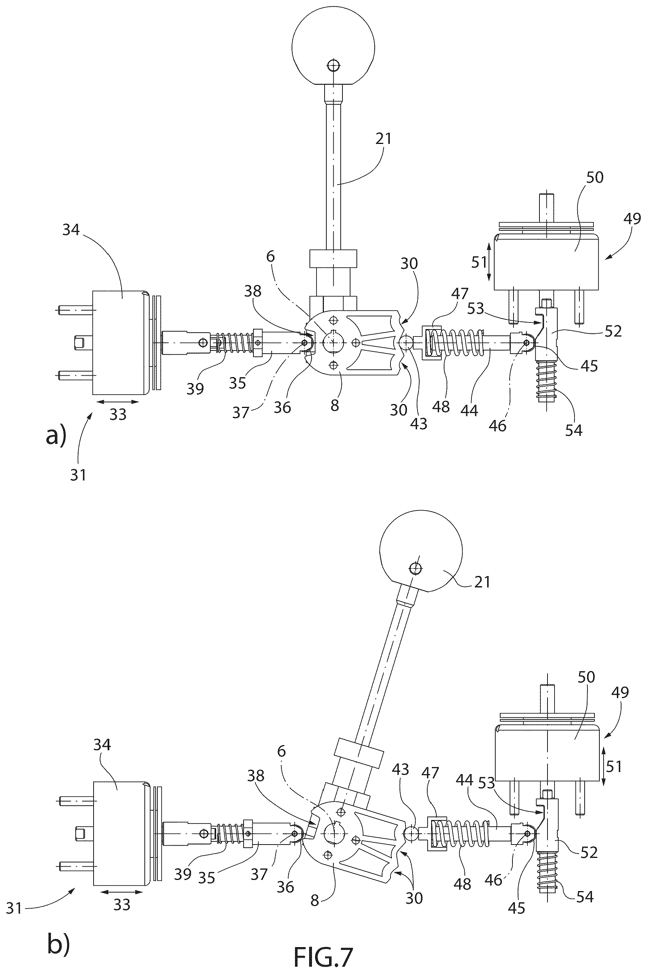

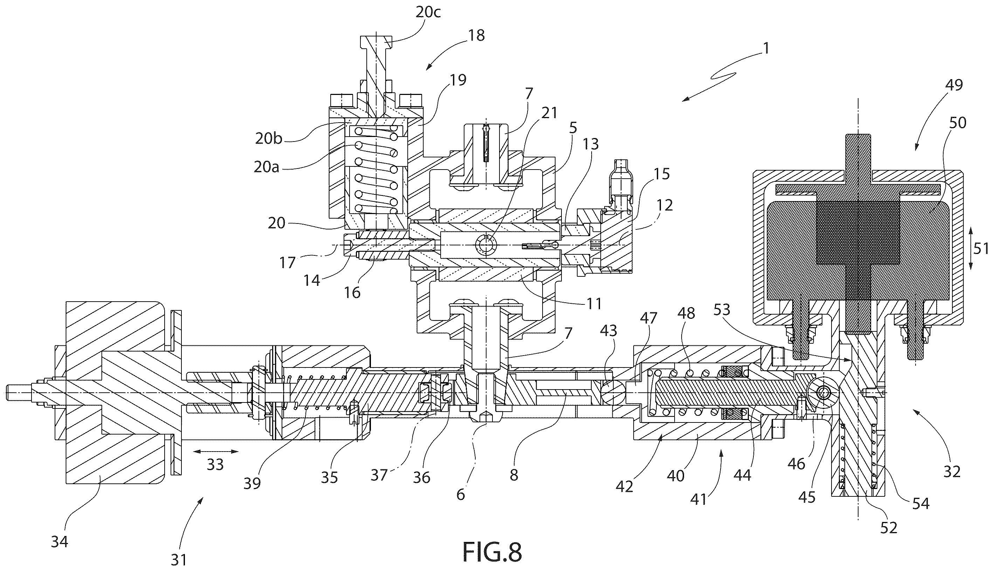

With reference to Figures 1 to 8, reference number 1 denotes, as a whole, a control tower of a gearbox for road vehicles (not shown).

The control tower 1 comprises a support frame 2 comprising, in turn, a bottom plate 3 configured to be fixed to a body (not shown) of the road vehicle (not shown), and two side plates 4 projecting upwards from the plate 3 perpendicularly to the plate 3.

The control tower 1 is also provided with a rotating bracket 5, which extends between the plates 4, is substantially square-shaped, and is mounted to rotate about a rotation axis 6 substantially perpendicular to the plates 4 themselves.

The bracket 5 has two opposite support pins 7, which extend through the plates 4 coaxially to the axis 6, and which one supports, connected, an engagement drum 8 (which will be better shown below) and the other supports a detection device 9, in this case an angular position sensor, configured to detect the angular position of the bracket 5 around the axis 6 and to supply an electrical signal to an electronic control unit 10.

The bracket 5 supports a guide tube 11, which is mounted inside the bracket 5, and is rotatably coupled to the bracket 5 to rotate, with respect to the bracket 5 and in a manner that will be better explained below, about a rotation axis 12 perpendicular to the axis 6.

The tube 11 has two opposite support pins 13, which extend through the bracket 5 coaxially to the axis 12, and support, connected, a support block 14 and a detection device 15, in this case an angular position sensor, configured to detect the angular position of the tube 11 around the axis 12 and to supply an electrical signal to the electronic control unit 10 configured, in turn, to control the operation of the control tower 1 in response to signals from the devices 9 and 15.

The block 14 supports two contact rollers 16, which are mounted on opposite sides of the axis 12, are rotatably coupled to the block 14 to rotate with respect to the block 14 about respective rotation axes 17 parallel to each other and to the axis 12, and cooperate with a damping device 18 mounted on the bracket 5 parallel to the axis 6.

The damping device 18 comprises a cylinder 19 and a piston 20, which projects outside the cylinder 19 parallel to the axis 12, is slidably coupled to the cylinder 19, and is held in contact with the rollers 16 by a spring 20a interposed between the cylinder 19 and the piston 20.

The spring 20a preload is selectively controlled by means of a disk 20b slidably engaged in the cylinder 19 and an adjusting screw 20c screwed through the cylinder 19 to move the disk 20b along the cylinder 19.

The tube 11 is slidably engaged by an operating lever 21, which projects upwards from the tube 11 and the plates 4, is axially locked upwards by an upper locking plate 22 attached to the free ends of the plates 4, and allows the gearbox 1 to be operated in an at least partly manual operating mode.

The lever 21 is moved, and normally held, in a raised position by a spring 23 interposed between the tube 11 and the lever 21, and is moved by the driver to a lowered position against the action of the spring 23.

The plate 22 is provided with a central channel 24 substantially parallel to the axis 6 and a plurality of lateral channel 25 pairs (in this case three channel 25 pairs) distributed along the channel 24.

Each pair of channels 25 comprises two channels 25, which are arranged on opposite sides of the channel 24, are substantially parallel to the axis 12, and correspond to respective gears of the gearbox (not shown).

In use, the lever 21 is moved by the driver to engage a certain gear:
around the axis 12 and along the channel 24 from a neutral starting position corresponding to the centre pair of channels 25; and
around the axis 6 and along one of the channels 25 to engage the gear considered.

Obviously, a given gear is disengaged using an operational sequence opposite to the one just described.

The plate 22 is also associated, in this case, with a plurality of operating buttons 26a, which allow operation of the gearbox (not shown) according to an automatic operating mode, and an operating button 26b, which allows operation of the gearbox (not shown) according to a manual operating mode.

The lever 21 is also provided with a coupling pin 27, which projects from the lever 21 through the tube 11 parallel to the axis 12, and is movable, as a result of the movement of the lever 21 around the axis 12, along a guide track 28 formed on the outer surface of the tube 11.

According to a variant not shown, the plate 22 and the buttons 26a, 26b are eliminated and replaced with a closure plate (not shown) provided with four pairs of channels 25, the last channel 25 pair of which is connected with an automatic gearbox (not shown) operating mode.

In this case, to engage the automatic operating mode, the lever 21 is first moved to its downward position against the action of the spring 23 to disengage the pin 27 from the track 28, is then moved about the axis 12 to align with the channels 25 of the last pair of channels 25 and to engage the pin 27 in a seat 29 formed at the corresponding end of the track 28, and is finally moved about the axis 6 and along one of the channels 25.

With regard to the above description, it should be noted that:
at the end of the movement around the axis 12, the lever 21 engages the "neutral" mode;
at the end of the movement around the axis 6 and along a channel 25, the lever 21 engages "forward movement" mode; and
at the end of the movement around the axis 6 and along the other channel 25, the lever 21 engages the "reverse" mode.

The drum 8 is angularly coupled in a fixed manner to the bracket 5 in order to rotate around the axis 6, has three seats 30 formed on a free end of the drum 8, and defines part of an engagement assembly GI configured to mechanically reproduce the engagement load of the gear selected by the driver.

The assembly GI further comprises two stop units 31, 32 mounted on opposite sides of the drum 8 in a direction 33 parallel to the axis 12 to at least limit the rotation of an assembly defined by the drum 8 and the lever 21 about the axis 6.

The unit 31 comprises, in this case, an electromagnetic actuator 34, which is fixed to the frame 2 parallel to the direction 33, and is provided with an output rod 35 slidably coupled to the actuator 34 to perform, with respect to the actuator 34, straight movements in the direction 33.

The rod 35 is provided with a coupling roller 36 mounted on a free end of the rod 35 to rotate about a rotation axis 37 parallel to the axis 6, and is movable between a forward stop position in which the roller 36 engages a slot 38 formed on the side surface of the drum 8 to at least limit the rotation of the assembly defined by the drum 8 and the lever 21 about the axis 6, and a rearward release position, in which the roller 36 disengages the slot 38 to allow the assembly defined by the drum 8 and the lever 21 to rotate about the axis 6.

The rod 35 is moved, and normally maintained, in its forward stop position by a spring 39 interposed between the actuator 34 and the rod 35, and is moved from its forward stop position to its rearward release position against the action of the spring 39 by electrically energising the actuator 34 when the gear selected by the driver coincides with the gear preselected by the control unit 10.

In other words:
when the driver selects a new gear immediately above or below the gear already engaged, the control unit 10 controls the power supply to the actuator 34 so as to move the rod 35 into its rearward release position and allow the new gear to be engaged; and
when the driver selects a new gear that is not immediately above or below the gear already engaged, the control unit 10 commands the deactivation of the actuator 34 so as to allow the spring 39 to move the rod 35 into its forward stop position and temporarily prevent the new gear from being engaged while waiting for the gearbox to synchronise the selected gear.

The unit 32 comprises a guide cylinder 40 and a stop member 41 slidably engaged in the cylinder 40 to move in the direction 33 between a stop position, wherein the member 41 engages a seat 30 of the drum 8 to at least limit the rotation of the assembly defined by the drum 8 and the lever 21 about the axis 6, and an uncoupling position, wherein the member 41 disengages the seat 30 itself to allow the rotation of the assembly defined by the drum 8 and the lever 21 about the axis 6.

The member 41 comprises a pin element 42 and a ball element 43 interposed between the pin element 42 and the drum 8.

The pin element 42 comprises, in turn, a support rod 44 provided with a coupling roller 45 mounted on opposite sides of the ball element 43 in the direction 33 to rotate about a rotation axis 46 orthogonal to the axes 6 and 12; a tip 47 interposed between the ball element 43 and the rod 44; and a spring 48 interposed between the cylinder 40 and the tip 47 to move, and normally maintain, the ball element 43 in its stop position.

The unit 32 also comprises an operating device 49, which is movable between a locking position, wherein the device 49 prevents the member 41 from moving to its uncoupling position, and a release position, wherein the device 49 allows the member 41 to move to its uncoupling position.

The device 49 comprises, in this case, an electromagnetic actuator 50, which is fixed to the frame 2 parallel to a direction 51 parallel to the axis 6 and transversal to the direction 33, and provided with an output rod 52 slidably coupled to the actuator 50 to perform, with respect to the actuator 50, straight movements in the direction 51.

The rod 52 is provided with a slot 53 formed on its outer surface, and is movable in the direction 51 between a release position, wherein the slot 53 is aligned with the roller 45 in the direction 33 to allow the roller 45 to engage the slot 53 and the member 41 to move into its uncoupling position under the thrust of the drum 8, and a locking position, wherein the roller 45 is disengaged from the slot 53 and the rod 52 prevents the member 41 from moving into its uncoupling position under the thrust of the drum 8.

The rod 52 is moved, and normally held, in its locking position by a spring 54 interposed between the actuator 50 and the rod 52, and is moved from its locking position to its release position against the action of the spring 54 by electrically energising the actuator 50 when the clutch pedal (not shown) of the road vehicle (not shown) is engaged by the driver.

The gearbox 1 has a number of advantages principally resulting from the fact that:
the stop unit 31 only allows a certain gear to be engaged when the gear selected by the driver coincides with the gear preselected by the control unit 10;
the stop unit 32 only allows a given gear to be engaged when the clutch pedal (not shown) of the road vehicle (not shown) is operated by the driver; and
the spring 20a of the damping device 18, the spring 48 of the pin element 42, and the configuration of the seats 30 of the drum 8 allow the engagement force of the selected gear to be simulated and the operating lever 21 to be moved to its initial neutral position.

## Claims

1. A control tower of a gearbox for road vehicles, the control tower comprising an operating lever (21) mounted so as to rotate around a first rotation axis (6) and a second rotation axis (12), which are transversal to one another, and move between at least two pairs of gears and between the gears of each pair of gears; and being **characterized in that** it further comprises a detection device (9, 15) to detect the angular position of the operating lever (21) around said first and second rotation axes (6, 12) and to supply at least one electrical signal to an electronic control unit (10) configured to detect the gear engaged by the operating lever (21) and control the operation of the gearbox.

2. The control tower according to claim 1, wherein the detection device (9, 15) comprises a first detection member (9), in particular a first angular position sensor, to detect the angular position of the operating lever (21) around the first rotation axis (6) and a second detection member (15), in particular a second angular position sensor, to detect the angular position of the operating lever (21) around the second rotation axis (12).

3. The control tower according to claim 1 or 2 and further comprising a damping device (18) to counter the rotation of the operating lever (21) around the second rotation axis (12).

4. The control tower according to any one of the preceding claims and further comprising an engagement drum (8) coupled to the operating lever (21) in an angularly fixed manner so as to rotate around the first rotation axis (6) between a rest position and two operating positions for engaging respective gears.

5. The control tower according to claim 4 and further comprising a first stop unit (31, 32) to limit the rotation of an assembly defined by the engagement drum (8) and the operating lever (21) around the first rotation axis (6).

6. The control tower according to claim 5, wherein the first stop unit (32) is configured to move between a stop position and an uncoupling position for the assembly defined by the engagement drum (8) and the operating lever (21) and is movable from the stop position to the uncoupling position in response to the activation of a clutch pedal by the driver.

7. The control tower according to claim 5 or 6, wherein the engagement drum (8) is provided with three seats (30) and the first stop unit (32) comprises a stop member (41) movable in a first advancing direction (33), which is transversal to the first rotation axis (6), between a stop position, wherein the stop member (41) engages a seat (30) of the engagement drum (8) to limit the rotation of the assembly defined by the engagement drum (8) and the operating lever (21) around the first rotation axis (6), and an uncoupling position, wherein the stop member (41) disengages the seat (30) to allow the assembly defined by the engagement drum (8) and the operating lever (21) to rotate around the first rotation axis (6).

8. The control tower according to claim 7, wherein the first stop unit (32) further comprises a first operating device (49), which is movable between a locking position, wherein the first operating device (49) prevents the stop member (41) from moving to its uncoupling position, and a release position, wherein the first operating device (49) allows the stop member (41) to move to its uncoupling position.

9. The control tower according to claim 8, wherein the first operating device (49) comprises a first actuator (50) provided with an output rod (52) movable between said locking and release positions.

10. The control tower according to claim 9, wherein the output rod (52) of the first actuator (50) is movable between said locking and release positions in a second advancing direction (51) transversal to the first advancing direction (33) and is provided with a slot (53) configured to be engaged by the stop member (41) following its movement from the stop position to the uncoupling position.

11. The control tower according to any one of the claims from 7 to 10, wherein the stop member (41) comprises a pin element (42) and a ball element (43) interposed between the pin element (42) and the engagement drum (8).

12. The control tower according to claim 11, when it depends on claim 9 or 10, wherein the pin element (42) comprises a support rod (44) cooperating with the output rod (52), a tip (47) interposed between the ball element (43) and the support rod (44) and a spring (48) to move and normally hold the tip (47) in contact with the ball element (43).

13. The control tower according to any one of the claims from 4 to 12 and further comprising a second stop unit (31) to limit the rotation of the assembly defined by the engagement drum (8) and the operating lever (21) around the first rotation axis (6).

14. The control tower according to claim 13, wherein said first and second stop units (31, 32) are located on opposite sides of the engagement drum (8).

15. The control tower according to claim 13 or 14, wherein the second stop unit (31) is configured to move between a stop position, wherein the second stop unit (31) prevents the assembly defined by the engagement drum (8) and the operating lever (21) from moving around the first rotation axis (6), and a release position, wherein the second stop unit (31) allows the assembly defined by the engagement drum (8) and the operating lever (21) to move around the first rotation axis (6).

16. The control tower according to claim 15, wherein the second stop unit (31) comprises a second actuator (34) provided with an output rod (35) movable between said stop and release positions.

17. The control tower according to claim 16, wherein the output rod (35) of the second actuator (34) is movable from its stop position to its release position when the gear selected by the operating lever (21) corresponds to the gear preselected by the electronic control unit (10).
